# EUROPEAN PATENT SPECIFICATION

(11) **EP 2 011 311 B1**
(45) Date of publication and mention of the grant of the patent: **23.07.2014**
(21) Application number: 07754821.2
(22) Date of filing: 05.04.2007
(51) Int. Cl.: H04L 29/06

(54) **METHODS, APPARATUSES AND COMPUTER PROGRAMS FOR DELIVERING BROADCAST SERVICE GUIDE INFORMATION TO A MOBILE TERMINAL VIA PRESENCE SERVER**
VERFAHREN, VORRICHTUNGEN UND COMPUTERPROGRAMME ZUR LIEFERUNG VON BROADCAST-DIENST GUIDE-INFORMATIONEN AN EIN MOBILGERÄT MITTELS EINES PRÄSENZ-SERVERS
MÉTHODES; APPAREILS ET LOGICIELS POUR FOURNIR D'INFORMATIONS D'UN GUIDE DE PROGRAMME DE SERVICE DE DIFFUSION PAR L'INTERMÉDIAIRE D'UN SERVEUR DE PRÉSENCE

(30) Priority: 06.04.2006 US 398757
(43) Date of publication of application: 07.01.2009
(73) Proprietor: Vringo Infrastructure Inc., New York, NY 10017 (US)
(72) Inventor: JYSKE, Eero, Irving, TX 75063 (US); PAILA, Toni, Rye, NY 10580 (US)
(74) Representative: Hale, Peter
(86) International application number: PCT/US2007/008362
(87) International publication number: WO 2007/117492

(56) References cited:
- WO-A-2004/036797
- US-A1- 2003 208 545
- US-A1- 2006 075 432
- "Universal Mobile Telecommunications System (UMTS); Presence service; Architecture and functional description; Stage 2 (3GPP TS 23.141 version 7.1.0 Release 7)" ETSI STANDARDS, EUROPEAN TELECOMMUNICATIONS STANDARDS INSTITUTE, SOPHIA-ANTIPO, FR, vol. 3-SA2, no. V710, December 2005 (2005-12), pages 1-37, XP014032451 ISSN: 0000-0001

## Description

### TECHNICAL FIELD

Aspects of the invention relate generally to communications networks. More specifically, aspects of the invention relate to utilization of presence service in a communication network.

### BACKGROUND OF THE INVENTION

Digital broadband broadcast networks enable end users to receive digital content including video, audio, data, and so forth. Using a mobile terminal, a user may receive digital content over a wireless digital broadcast network. For example, a user may receive data such as a broadcast program in a data stream. Additional data associated with the broadcast program may also be desired such as program title, news, interactive services, or additional related information. Much of the information desired may include information that changes over time. Hence, a mobile terminal user may wish to receive information associated with a broadcast program that is up-to-date such as information updated and provided in real-time.

Generally, an Electronic Service Guide (ESG) enables a terminal to communicate what services are available to end users and how the services may be accessed. ESG fragments are independently existing pieces of the ESG. Traditionally, ESG fragments comprise XML documents, but more recently they have encompassed a vast array of items, such as for example, a SDP (Session Description Protocol) description, textual file, or an image. The ESG fragments describe one or several aspects of currently available (or future) service or broadcast program. Such aspects may include for example: free text description, schedule, geographical availability, price, purchase method, genre, and supplementary information such as preview images or clips. Audio, video and other types of data comprising the ESG fragments may be transmitted through a variety of types of networks according to many different protocols. For example, data can be transmitted through a collection of networks usually referred to as the "Internet" using protocols of the Internet protocol suite, such as Internet Protocol (IP) and User Datagram Protocol (UDP). Data is often transmitted through the Internet addressed to a single user. It can, however, be addressed to a group of users, commonly known as multicasting. In the case in which the data is addressed to all users it is called broadcasting. The ESG data may be transmitted using different types of wireless digital networks including digital broadband broadcast and/or multicast networks.

In the past, a digital-broadcast terminal would typically need to be able to locate each ESG separately utilizing bearer and service-specific methods for discovery of each ESG. This discovery process would consist of detecting each network, executing the bearer specific bootstrap, and then downloading the ESG. The terminal would be aware of services only for networks that the terminal can detect. The terminal would also need to go through a discovery process for each of the networks to determine whether the network actually contains relevant services forming a logically linked ESG.

Efficient delivery of program or service information including ESG data, program or service content, service information, update information, or network information to a mobile device has been difficult to attain. There is a need for efficient and effective methods and systems for delivery of such information to a mobile device such as a mobile TV device.

US 2003/0208545 A1 discloses a system in which a presence service is used to provide information about scheduled events, such as broadcast programs, that may be of interest to the user of a subscribing device.

### BRIEF SUMMARY OF THE INVENTION

The following presents a simplified summary in order to provide a basic understanding of some aspects of the invention. The summary is not an extensive overview of the invention. It is neither intended to identify key or critical elements of the invention nor to delineate the scope of the invention. The following summary merely presents some concepts of the invention in a simplified form as a prelude to the more detailed description below.

In one aspect of the invention, a method comprising receiving a subscription from a digital-broadcast terminal to a presence service; receiving and storing presence information corresponding to at least one fragment of a first service guide under a presence identifier identifying the presence information at a presence server; receiving a request from the digital-broadcast terminal for information on one or more related service guides or one or more related service guide fragments that are related to the at least first service guide fragment, the request including the presence identifier at the presence server; and responding to the request by providing, by the presence server, to the digital-broadcast terminal information corresponding to one or more related service guides or related service guide fragments that are related to the first service guide.

This aspect also provides a computer program comprising program code that, when executed by a processor, causes the processor to perform such a method.

In one example, the method may include subscribing a mobile terminal to a presence service in which service guide information may be received and stored under a presence identifier at the presence server and the information may be delivered to another subscribing mobile terminal.

This aspect also provides a presence server comprising a presence network agent configured to: receive a subscription from a digital-broadcast terminal (501) to a presence service; receive and store presence information corresponding to at least one fragment of a first service guide under a presence identifier identifying the presence information; receive a request from the digital-broadcast for information on one or more linked service guides or one or more related service guide fragments that are related to the first service guide, the request including the presence identifier; and respond to the request by providing to the digital-broadcast terminal information corresponding to one or more related service guides or service guide fragments that are related to the first service guide.

This aspect may also provide a system for delivering service guide information to a mobile terminal including such a presence server, a mobile TV terminal and a service provider.

Another aspect relates to a method comprising: to a presence network agent comprised by a presence server, a subscription to a presence service; sending, to the presence network agent, a request for information on one or more related service guides or one or more related service guide fragments that are related to at least one first service guide fragment, the request including a presence identifier identifying the presence information corresponding to the at least one fragment of a first service guide; and receiving, from the network presence agent, information corresponding to one or more related service guides or related service guide fragments that are related to the service guide.

This aspect also provides a computer program comprising program code that, when executed by a processor, causes the processor to perform such a method.

This aspect also provides a digital-broadcast terminal comprising a presence user agent arranged to: send, to a presence network agent, a subscription to a presence service; send, to the presence network agent, a request for information on one or more related service guides or one or more related service guide fragments that are related to at least one first service guide fragment, the request including a presence identifier identifying the presence information corresponding to the at least one fragment of a first service guide; and receive, from the network presence agent, information corresponding to one or more related service guides or related service guide fragments that are related to the service guide.

### BRIEF DESCRIPTION OF THE DRAWINGS

A more complete understanding of the present invention and the advantages thereof map be acquired by referring to the following description in consideration of the accompanying drawings, in which like reference numbers indicate like features, and wherein:
FIG. 1 illustrates an example of a wireless communication system in which one or more illustrative embodiments of the invention may be implemented.
FIG. 2 illustrates an example of a mobile device in accordance with an aspect of the present invention.
FIG. 3 is a schematic diagram of an example transport object in accordance with at least one aspect of the present invention.
FIG. 4 illustrates an example of transmitting a plurality of single Transport Objects in accordance with at least one aspect of the present invention.
FIG. 5 illustrates one example of a method and system for delivering information to a mobile terminal via a presence server in accordance with least one aspect of the present invention.
FIG. 6 is a flowchart illustrating an example of a method for delivering information to a mobile terminal in accordance wit11 at least one aspect of the present invention.
FIG. 7 is a partial block diagram illustrating an example of a terminal accessing information of another terminal in accordance with at least one aspect of the present invention.
FIG. 8 is a flowchart illustrating an example of a method of accessing information of a terminal in accordance with at least one aspect of the present invention.
FIG. 9 is a flow diagram showing service discovery utilizing a presence server in accordance with at least one aspect of the invention.
FIG. 10 is a flow diagram showing service discovery with a known presence-server entry point.
FIG. 11 is a schematic diagram showing a system for performing service discovery utilizing a presence server in accordance with at least one aspect of the invention.

### DETAILED DESCRIPTION

In the following description of the various embodiments, reference is made to the accompanying drawings, which form a part hereof, and in which is shown by way of illustration various embodiments in which the invention may be practiced. It is to be understood that other embodiments may be utilized and structural and functional modifications may be made without departing from the scope and spirit of the present invention.

It is noted that various connections are set forth between elements in the following description. It is noted that these connections in general and, unless specified otherwise, may be direct or indirect and that this specification is not intended to be limiting in this respect.

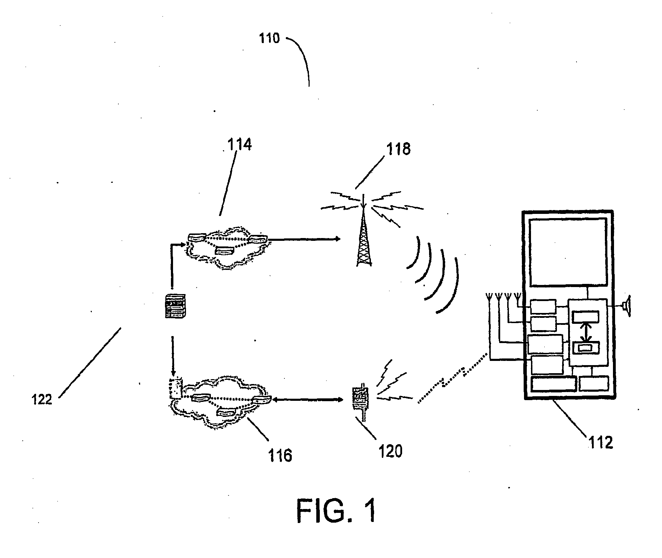

FIG. 1 illustrates an example of a wireless communication system 110 in which the systems and methods of the present invention may be advantageously employed. One or more network-enabled mobile devices 112, such as a personal digital assistant (PDA), cellular telephone, mobile terminal, personal video recorder, portable or fixed television, personal computer, digital camera, digital camcorder, portable audio device, portable or fixed analog or digital radio, or combinations thereof, are in communication with a service source 122 through a broadcast network 114 and/or cellular network 116. The mobile terminal/device 112 may comprise a digital broadcast receiver device. The service source 122 may be connected to several service providers that may provide their actual program content or information or description of their services and programs to the service source that further provides the content or information to the mobile device 112. The several service providers may include but are not limited to one or more television and/or digital television service providers, analog and/or digital AM/FM radio service providers, SMS/MMS push service providers, Internet content or access providers.

The broadcast network 114 may include a radio transmission of IP datacasting over DVB and/or DVB-H. The broadcast network 114 may broadcast a service such as a digital or analog television signal and supplemental content related to the service via transmitter 118. The broadcast network may also include a radio, television or IP datacasting broadcasting network. The broadcast network 114 may also transmit supplemental content, which may include a television signal, audio and/or video streams, data streams, video files, audio files, software files, and/or video games. In the case of transmitting IP datacasting services, the service source 122 may communicate actual program content to user device 112 through the broadcast network 114 and additional information such as user right and access information for the actual program content through the cellular network 116.

The mobile device 112 may also contact the service source 122 through the cellular network 116. The cellular network 116 may include a wireless network and a base transceiver station transmitter 120. The cellular network may include a second/third-generation (2G/3G) cellular data communications network, a Global System for Mobile communications network (GSM), or other wireless communication network such as a WLAN network.

In one aspect of the invention, mobile device 112 may include a wireless interface configured to send and/or receive digital wireless communications within cellular network 116. The information received by mobile device 112 through the cellular network 116 or broadcast network 114 may include user selection, applications, services, electronic images, audio clips, video clips, and/or WTAI (Wireless Telephony Application Interface) messages. As part of cellular network 116, one or more base stations (not shown) may support digital communications with receiver device 112 while the receiver device is located within the administrative domain of cellular network 116.

Examples of other digital broadcast standards which digital broadband broadcast system 110 may utilize include Digital Video Broadcast - Terrestrial (DVB-T), Integrated Services Digital Broadcasting - Terrestrial (ISDB-T), Advanced Television Systems Committee (ATSC) Data Broadcast Standard, Digital Multimedia Broadcast-Terrestrial (DMB-T), Terrestrial Digital Multimedia Broadcasting (T-DMB), Forward Link Only (FLO), Digital Audio Broadcasting (DAB), and Digital Radio Mondiale (DRM). Other digital broadcasting standards and techniques, now known or later developed, may also be used. An aspect of the invention is also applicable to other multicarrier digital broadcast systems such as, for example, T-DAB, T/S-DMB, ISDB-T, and ATSC, proprietary systems such as Qualcomm MediaFLO / FLO, and non-traditional systems such 3GPP MBMS (Multimedia Broadcast/Multicast Services) and 3GPP2 BCMCS (Broadcast/Multicast Service).

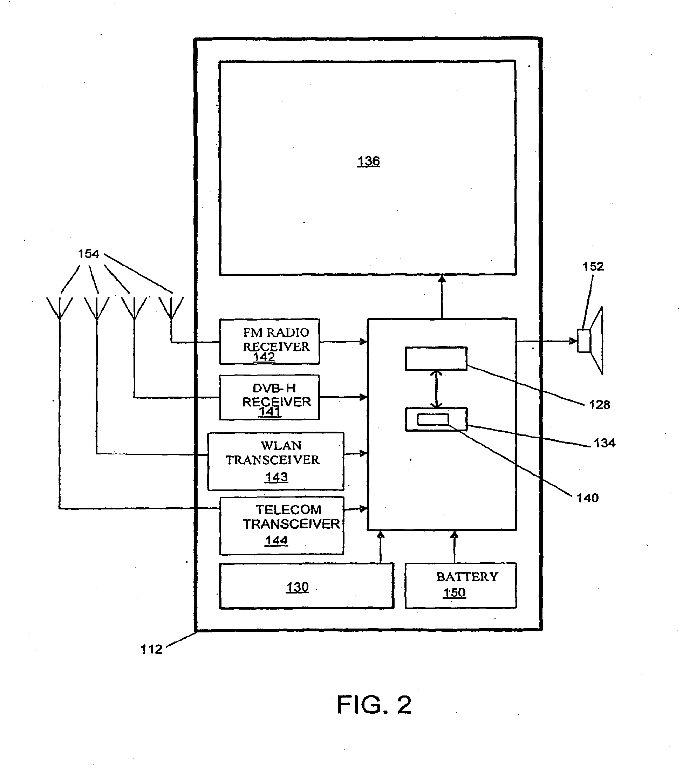

As shown in FIG. 2, mobile device 112 may include processor 128 connected to user interface 130, memory 134 and/or other storage, and display 136. Mobile device 112 may also include battery 150, speaker 152 and antennas 154. User interface 130 may further include a keypad, touch screen, voice interface, one or more arrow keys, joy-stick, data glove, mouse, roller ball, touch screen, voice interface, or the like.

Computer executable instructions and data used by processor 128 and other components within mobile device 112 may be stored in a computer readable memory 134. The memory may be implemented with any combination of read only memory modules or random access memory modules, optionally including both volatile and nonvolatile memory. Software 140 may be stored within memory 134 and/or storage to provide instructions to processor 128 for enabling mobile device 112 to perform various functions. Alternatively, some or all of mobile device 112 computer executable instructions may be embodied in hardware or firmware (not shown).

Mobile device 112 may be configured to receive, decode and process digital broadband broadcast transmissions that are based, for example, on the Digital Video Broadcast (DVB) standard, such as DVB-H or DVB-MHP, through a specific DVB receiver 141. The mobile device may also be provided with other types of receivers for digital broadband broadcast transmissions. Additionally, receiver device 112 may also be configured to receive, decode and process transmissions through FM/AM Radio receiver 142, WLAN transceiver 143, and telecommunications transceiver 144. In one aspect of the invention, mobile device 112 may receive radio data stream (RDS) messages.

In an example of the DVB standard, one DVB 10 Mbit/s transmission may have 200, 50 kbit/s audio program channels or 50, 200 kbit/s video (TV) program channels. The mobile device 112 may be configured to receive, decode, and process transmission based on the Digital Video Broadcast-Handheld (DVB-H) standard or other DVB standards, such as DVB-MHP, DVB-Satellite (DVB-S), DVB-Terrestrial (DVB-T) or DVB-Cable (DVB-C). Similarly, other digital transmission formats may alternatively be used to deliver content and information of availability of supplemental services, such as ATSC (Advanced Television Systems Committee), NTSC (National Television System Committee), ISDB-T (Integrated Services Digital Broadcasting - Terrestrial), DAB (Digital Audio Broadcasting), DMB (Digital Multimedia Broadcasting), FLO (Forward Link Only) or DIRECTV. Additionally, the digital transmission may be time sliced, such as in DVB-H technology. Time-slicing may reduce the average power consumption of a mobile terminal and may enable smooth and seamless handover. Time-slicing consists of sending data in bursts using a higher instantaneous bit rate as compared to the bit rate required if the data were transmitted using a traditional streaming mechanism. In this case, the mobile device 112 may have one or more buffer memories for storing the decoded time sliced transmission before presentation.

In addition, an Electronic Service Guide (ESG) may be used to provide program or service related information. Generally, an Electronic Service Guide (ESG) enables a terminal to communicate what services are available to end users and how the services may be accessed. The ESG consists of independently existing pieces of ESG fragments. Traditionally, ESG fragments include XML documents, but more recently they have encompassed a vast array of items, such as for example, a SDP (Session Description Protocol) description, textual file, or an image. The ESG fragments describe one or several aspects of currently available (or future) service or broadcast program. Such aspects may include for example: free text description, schedule, geographical availability, price, purchase method, genre, and supplementary information such as preview images or clips. Audio, video and other types of data including the ESG fragments may be transmitted through a variety of types of networks according to many different protocols. For example, data can be transmitted through a collection of networks usually referred to as the "Internet" using protocols of the Internet protocol suite, such as Internet Protocol (IP) and User Datagram Protocol (UDP). Data is often transmitted through the Internet addressed to a single user. It can, however, be addressed to a group of users, commonly known as multicasting. In the case in which the data is addressed to all users it is called broadcasting.

One way of broadcasting data is to use an IP datacasting (IPDC) network. IPDC is a combination of digital broadcast and Internet Protocol. Through such an IP-based broadcasting network, one or more service providers can supply different types of IP services including on-line newspapers, radio, and television. These IP services are organized into one or more media streams in the form of audio, video and/or other types of data. To determine when and where these streams occur, users refer to an electronic service guide (ESG). One example used in digital video broadcasting (DVB) streams is an electronic program guide (EPG). One type of DVB is Digital video broadcasting-handheld (DVB-H). The DVB-H is designed to deliver 10 Mbps of data to a battery-powered terminal device.

DVB transport streams deliver compressed audio and video and data to a user via third party delivery networks. Moving Picture Expert Group (MPEG) is a technology by which encoded video, audio, and data within a single program is multiplexed, with other programs, into a transport stream (TS). The TS is a packetized data stream, with fixed length packets, including a header. The individual elements of a program, audio and video, are each carried within packets having a unique packet identification (PID). To enable a receiver device to locate the different elements of a particular program within the TS, Program Specific Information (PSI), which is embedded into the TS, is supplied. In addition, additional Service Information (SI), a set of tables adhering to the MPEG private section syntax, is incorporated into the TS. This enables a receiver device to correctly process the data contained within the TS.

As stated above, the ESG fragments may be transported by IPDC over a network, such as for example, DVB-H to destination devices. The DVB-H may include, for exaple, separate audio, video and data streams. The destination device must then again determine the ordering of the ESG fragments and assemble them into useful information.

In one example of the present invention, ESG fragments may be delivered to a subscriber terminal in one or more data streams or channels. In this example, a plurality of channels (such as IP-packet streams) can be used to deliver ESG information to the subscriber terminal with at least one of the channels providing the subscriber terminal with information on the topology of the ESG fragments. Information on the topology of the ESG fragments may include, for example, information on the arrangement of the ESG fragment or information on the contents of the ESG fragment. The channel providing information on the topology of the ESG fragments can be referred to as an "announcement channel."

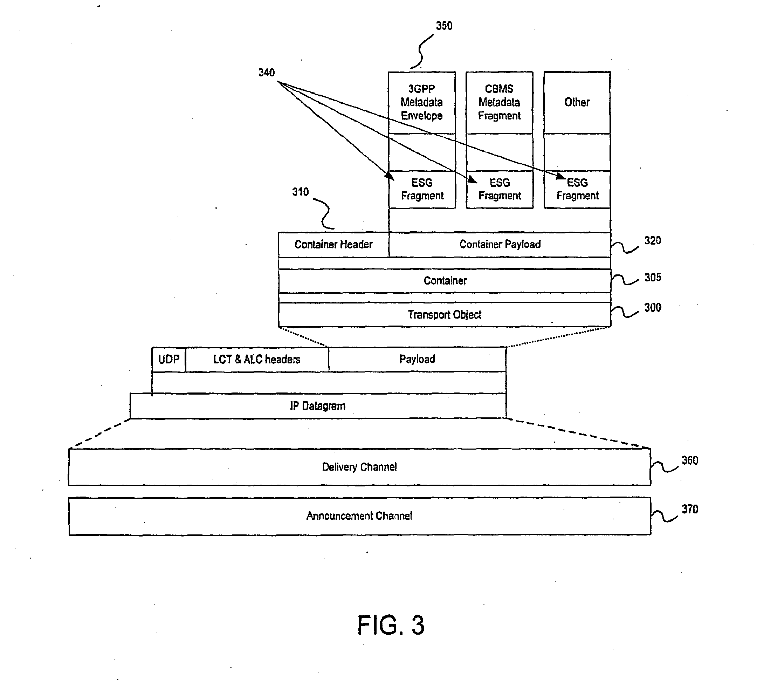

ESG fragments may be delivered in a transport object which may transport ESG information in a container. Thus, ESG fragments may be placed in a container that may be delivered in its own transport object. The container may further include a container header and a container payload, for example, in which the container header may provide information on where each container is located within the transport object. In one example, the transport object may contain a single container or a plurality of containers, each container including at least one ESG fragment. FIG. 3 is a schematic diagram of an example transport object in accordance with at least one aspect of the present invention. As illustrated in the example of FIG. 3, a transport object 300 may include a container that may include a container header 310 and a container payload 320. In one example, the container header 310 and the container payload 320 are incorporated into a single, container which may be incorporated into a single transport object 300 so that the container header 310 need not be recombined with information regarding where each container is located within different transported objects. Alternatively, the transport object 300 may contain a plurality of containers and a container may contain any number of ESG fragments 340. The container header 310 may contain information associated with a corresponding ESG fragment such as, for example, information regarding the container header 310 itself and/or the container payload 320.

In the example illustrated in FIG. 3, the ESG fragment 340 is contained in the container payload 320. The container header 310 may contain descriptors for identifying and describing ESG fragments in the corresponding container payload 320. Thus, the characteristics of the ESG fragment may be identified, such as but not limited to the position of the ESG fragment in the transport object 300 or the length of each contained ESG fragment 340. For example, in one embodiment, a field specifies where the particular ESG begins within the container payload 320 by providing, for example, an offset value, start and end points, or the like. In other embodiments, metadata 350 may be associated with the individual ESG fragments 340, located within or proximate to the header 310, descriptor entries, an ESG fragment 340 or a mixture thereof. In one exemplary embodiment, the association of a 3GPP metadata envelope with an ESG fragment 340 may substitute for, or negate the need of additional metadata to be located in the header 310 in relation to that particular ESG fragment.

Descriptors for identifying and describing ESG fragments may include descriptors such as Service Guide Delivery Descriptors (SGDD). SGDDs carry information on various attributes of ESG fragments such as the availability or validity of the ESG fragments. Hence, the SGDD contains data that can be used to retrieve and/or identify the associated ESG fragments. ESG fragments may also be grouped together and identified as a group by a Service Guide Delivery Unit (SGDU). Grouping of the ESG fragments may be grouped in a variety of ways. For example, the ESG fragments may be grouped together based on certain criteria. The criteria may be declared in an element or parameter such as a Grouping Criteria element of the SGDD. Hence, the SGDD can be used to specify criteria for grouping ESG fragments in a service guide in an SGDU. The criteria used to group ESG fragments can be of any variety such as but not limited to time. For example, ESG fragments corresponding to a particular period of time may be grouped together in a subgroup and identified by a corresponding SGDD. As another example, ESG fragments may be grouped based on content such as content type (e.g., comedy, action, drama, etc.).

An SGDD can also specify a pointer to a transport session for delivering corresponding ESG fragments within a SGDU. For example, an SGDD can identify the transport session based on criteria such as a destination IP address of a target delivery session, the destination port of a target delivery session, the source IP address of the delivery session, or an identifier of the target delivery session. The following table lists examples of sub-elements and attributes of the SGDD.

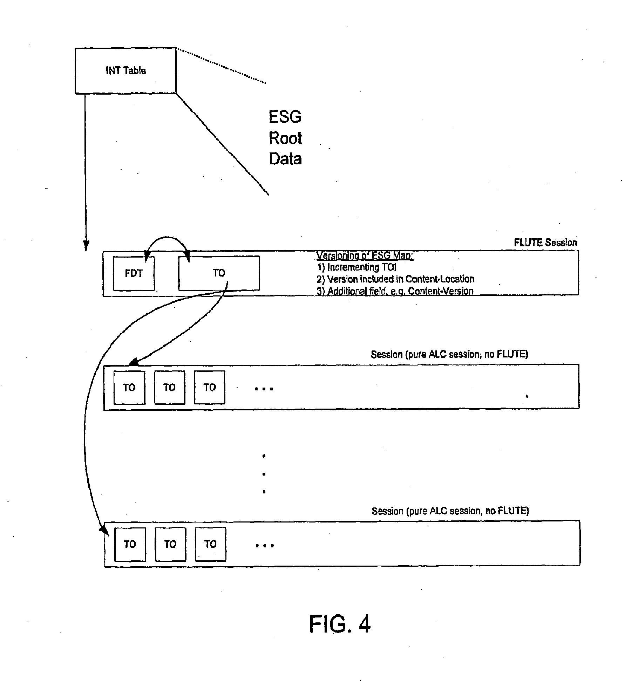

FIG. 4 illustrates an example of transmitting a plurality of single Transport Objects. As illustrated in Figure 4, the Transport Objects (TO) of the current invention may be carried in, for example, FLUTE (File Delivery over Unidirectional Transport) sessions, or a pure Asynchronous Layered Coding (ALC) session. In the example of FIG. 4, the ESG Root Channel data, such as IP Address, port number and Transport Session Identifier (TSI), are announced in the IP/MAC Notification Table (INT Table) which may be, for example, carried in the SI/PSI stream in DVB-H as one of the SI tables of DVB-H. The FLUTE session of the ESG Root Channel includes a File Delivery Table (FDT) of the session and one or more Transport Objects (TO). These Transport Objects in announcement carousels contain mapping between the different parts of ESGs and access parameters to the different ESG methods in which the ESG data is transmitted. The ESGs may differ from each other. For example, ESGs may be in different languages, genres or encoding.

Examples of access parameters may include, for example, IP Addresses, port numbers, TSIs, start and end times etc. The FLUTE session thus declares how the ESG data is distributed to different sessions. The TOs of the FLUTE session carrying this mapping data are described in the FDT of the FLUTE session. The ESG mapping data may be delivered in one or multiple TOs. The mapping can be made using XML Schema, plain ASCII text, Structured ASCII text such as multipart MIME or MIME headers, as binary with enumerated types or through various other means as is known in the art. The ESG data is in this example may be delivered in one or more TOs, which may be within pure ALC sessions, for example. The ESG data or parts of it may be delivered in some embodiments of the invention in one or more FLUTE sessions in addition to or instead of ALC sessions.

In one example, program or service content, network information or ESG data may be transmitted or delivered to a mobile TV device. The information delivered to the mobile TV device may be whole information or any fragment thereof. In addition, updates to the information may also be delivered to the mobile TV device which may include the ESG content, program or service content or network information, for example. In addition, the information delivered may include service set-up information of a current service on air.

A program or service provider may also deliver program or service data or information to a mobile device, such as a mobile TV device, using a presence server. A "presence server," as used herein is a server entity that stores and transmits presence information to a receiving entity associated with a "presence service." "Presence service," as used herein, refers to a service provided by a presence server for providing "presence information." "Presence information," as used herein refers to any dynamic set of information pertaining to a logical entity in a communications network and includes elements such as the status, reachability, willingness, or capabilities of the logical entity.

If the logical entity is a person, the presence information includes an overriding willingness of the person (may provide an indication that the user is or is not willing to accept communications for all available communication types), activities of the person (may provide an indication of the current activities associated with the person), location of the person, the time-zone in which the person is located (such as a geographical location or associated geographical privileges of the person), the mood of the person, an icon associated with the person (may include a small image of the person that may be chosen by the person or other entity and may be used to represent the person in a graphical user interface), a class of the person (may describe a class of a person and may be used to convey information that can be used for filtering or authorization).

If the logical entity is a service, the presence information includes application-specific willingness (may indicate whether the user of a specified communication service desires to receive incoming communication requests for a specified application and/or device) or availability (may indicate whether it is possible to receive an incoming communication request using a specified service and/or device if specified), an icon associated with the service (may include a small image representing the service that may be chosen by any entity and may be used to represent the service in a graphical user interface), session participation of the service (may indicate that a user is involved in at least one session of a specific service), a communication address of the service, a service description associated with the service, a timestamp corresponding to the service (may include information, specifying the time when a presence server received the most recent information pertaining to the data component instance that contributes to the data component instance's aggregation), a class of the service (may describe a class of a service and may be used to convey information that can be used for filtering or authorization), or an identifier for per-service identification of the service.

If the logical entity is a device, such as a mobile TV device, the presence information includes network availability of the device (e.g., a device may be connected to one or more networks, such as a GSM, CDMA, GPRS, etc., and network availability of the device may indicate the availability of each such network), a location at which the device is located (e.g., geographical location), a timestamp associated with the device or information on one or more applications that the device is currently using/running, has used previously, is possessing, or is capable to use. For example, information on a game that user is playing on the device, where the game can be accessed or downloaded for a common game session, a TV program that the user is watching, a name and type of a media player the device possesses, etc.

In one example, the presence server may further be used to deliver whole ESG information, program or service information, updates or service set-up information, for example, to mobile TV devices. In addition, a transmitted ESG may also include address information corresponding to a presence server. Hence, in this example, ESG program or service updates may be delivered to a mobile device via a presence. server and may be delivered as a whole or any fragment thereof. In addition, the ESG information may include a link to a corresponding presence server.

As described, presence information may be provided via a presence service to an entity. Presence information may be provided by a presence information source such as presence external agent (PEA) which may be located outside of the network, a presence network agent (PNA) which may be located in the network and may collect and send network related presence information, or a presence user agent (PUA) which may be located in the network and collect and send user related presence information to a presence server on behalf of a principal. In addition, the presence source may provide the presence information corresponding to one or more logical entities, which may also be associated with presence information from multiple presence sources.

In one example, a presence server may be provided for storing provided data such as presence information. The presence server may further include a presence network agent (PNA). The presence server may communicate with a terminal such as a mobile terminal or a mobile TV device. For example, the presence server including a PNA may provide information or data updates to the terminal. In another example, the terminal may include a presence user agent (PUA) for receiving updates from the presence server or the PNA.

Hence, in this example, information and data corresponding to a program or service may be provided to a mobile terminal via a presence server. The information may include any type of information pertaining to the program or service such as content information, service information, network provider information or ESG data. In addition, transmitted information, such as ESG data, may include an address corresponding to the presence server. This may include, for example, a link to the presence server.

In one example, whole ESG information is delivered to a mobile terminal by a presence server. In another example, a fragment of the ESG information is delivered to a mobile terminal by the presence server. In yet another example, program or service updates in ESG data is delivered to a network entity by the presence server.

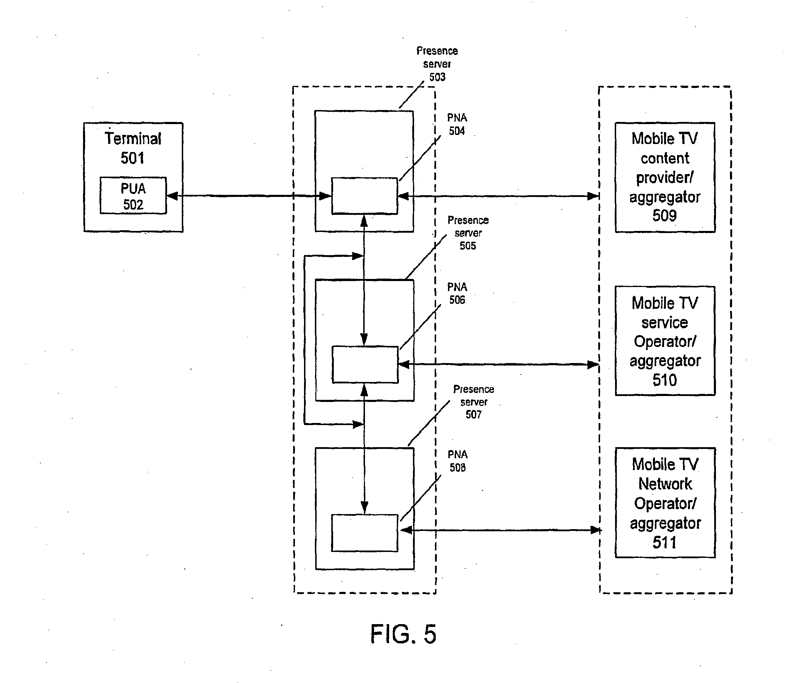

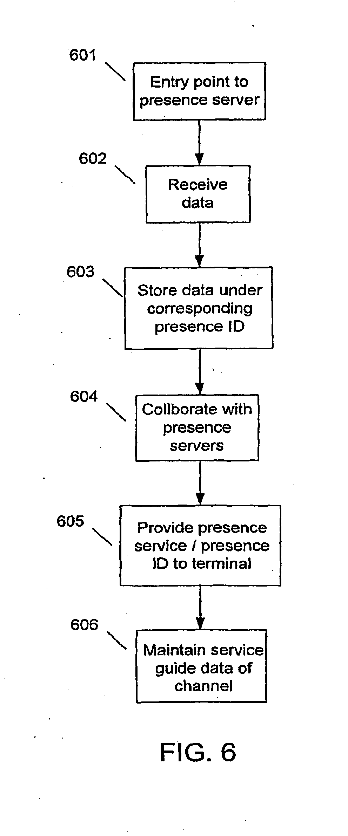

FIG. 5 illustrates one example of a method and system for delivering information to a mobile terminal, such as a mobile TV device via a presence server. FIG. 6 is a flowchart illustrating an example of a method for delivering information to a mobile terminal. In this example, a terminal 501 contains a presence user agent 502 (PUA). The PUA may collect and send user related presence information to a presence server. As illustrated in FIG. 5 and FIG. 6, the PUA 502 may gain access to an entry point of a presence server 503 (STEP 601, FIG. 6) which may contain presence identifiers (presence IDs). A "presence ID," as used herein, refers to an identifier that is associated with a ESG data and/or ESG fragments that are stored in a presence server. Thus, the data stored in the presence server may be accessed by reference to the corresponding "presence ID." The presence IDs in the presence server 503 may also correspond to ESG data or ESG fragments previously stored in the presence server 503. One example of an entry point to the presence server 503 may include a link such as a hyperlink. In this example, the terminal 501 may gain access to the presence server 503 via selection of a hyperlink (not shown).

The presence server 503 may include a Presence Network Agent (PNA) 504. PNA 504 which may collect and send network related presence information. In this example, the PNA 504 of the presence server 503 may collect or receive information from a program or service source such as a mobile TV content provider/aggregator 509, a mobile TV service operator/aggregator 510 or a mobile TV network operator/aggregator 511 (STEP 602, FIG. 6). For example, the PNA 504 of the presence server 503 may receive content-related descriptions or ESG fragments/data from the program or service source. The information received at PNA 504 may include, for example, content-related data of a service guide, content-related service guide XML fragments, identifiers of the ESG fragments, ready-made SGDUs/SGDDs, related notification messages, related purchase information, related pricing information, etc.

The program source may be a combination of more than one program source, for example, a mobile TV content provider/aggregator, mobile TV service operator/aggregator, and mobile TV network operator/aggregator. Alternatively, each program source or any combination thereof may be associated with a different presence server.

Likewise, multiple presence servers may be used. As the example of FIG. 5 illustrates, additional presence servers 505, 507 may also receive or upload information from a program source, such as ESG fragment information via respective PNA 506, 508. Information received or uploaded from the program sources such as service, program, or schedule-related information or descriptions or ESG fragments may also include a presence ID. In one example, the program source pushes/uploads the information to the presence server (504, 506, 508). In another example, the presence server (504, 506, or 508) retrieves the desired data from the program source. For example, the presence server (504, 506, or 508) fetches desired data from a program source by providing a target presence ID under which to store the desired data as presence information is provided.

The presence server (504, 506, or 508) may receive the information or data from a program source (STEP 602, FIG. 6) and may store the received (e.g., uploaded or fetched) information under a corresponding presence ID (STEP 603, FIG. 6). In addition, multiple presence servers may communicate or collaborate (STEP 604, FIG. 6) such as by exchanging data. In one example, there may be missing data or information elements at one presence server such that presence servers may collaborate to amend the data (STEP 604, FIG. 6). In one example, a first presence server 503 may have a service fragment under a particular presence ID. The first presence server 503 may contact a second presence server 505 and receive information from the second presence server 505, such as an associated program or service fragment. Alternatively, the second presence server 505 may push or upload the data to the first presence server 503.

The information stored at the presence server (503, 505, or 507 in the example of FIG. 5) may be provided to the terminal 501. For example, the terminal 501 may subscribe to a presence service associated with a presence server (503, 505, or 507). In one example, the terminal 501 subscribes to the presence service via Session Initiation Protocol (SIP) to a particular presence ID from the presence server (503, 505 or 507). For example, the terminal 501 may subscribe to a presence update service such that the terminal 501 may receive updates whenever a new update is received at the presence server (503, 505 or 507) from, for example, a program source such as a mobile TV content provider 509, a mobile TV service operator 510 or a mobile TV network operator 511. In this example, presence updates may be received at the presence server (503, 505 or 507) and may be provided or delivered to the terminal 501 via the presence server (503, 505 or 507). Alternatively, the terminal 501 may access the presence server (503, 505, or 507) to obtain information corresponding to a particular presence ID.

Hence, in this example, presence information may be provided to a terminal 505 with a corresponding presence ID (STEP 605, FIG. 6) which the terminal 505 may receive and use to maintain service guide entries of a currently playing channel (STEP 606, FIG. 6). The terminal 505 may further receive updates to the service guide entries as the updates are received (and/or stored) at the presence server (503, 505, or 507).

In this example, a user at terminal 505 may acquire service guide fragments via a presence server, the service guide fragments corresponding to a service or program content that is currently running on a specific channel. Also, the service guide fragments may correspond to a specific channel or may be provided by a specific provider and may include, for example, interactive service or real-time updates.

Also, information associated with a program or service such as service, content, or access relevant notifications may be transmitted to a terminal 501 in presence information. Alternatively, the presence server may maintain a list of valid SGDDs that may provide interactive services for a service guide announcement channel. Also, a user of a terminal 501 may request specific program or service content from a presence server that is currently running or currently available.

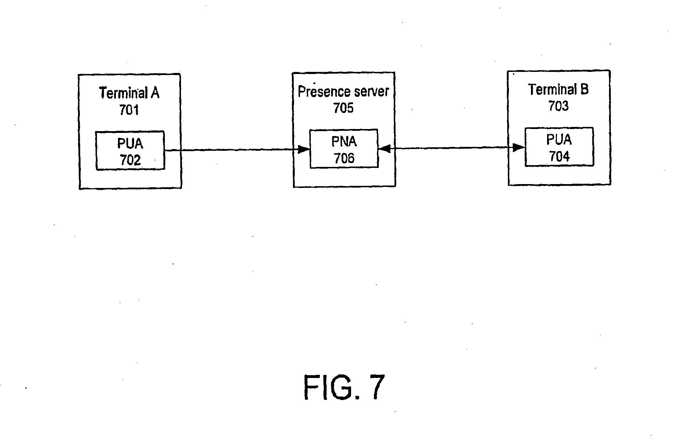

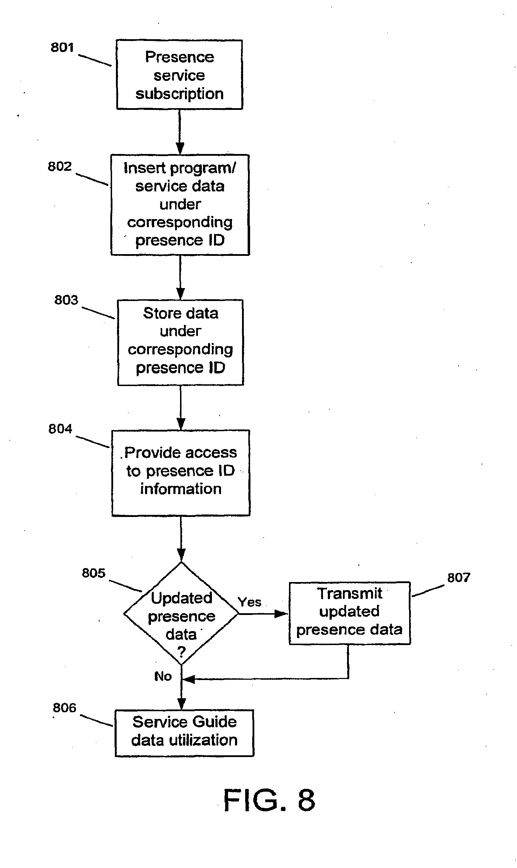

FIG. 7 is a partial block diagram illustrating an example of a terminal accessing information of another terminal. FIG. 8 is a flowchart illustrating an example of a method of accessing information of a terminal. In this example Terminal B 703 contains a PUA 704 and may communicate with Terminal A 701 which also has a PUA 702. Terminal B 703 may subscribe to a presence service (STEP 801, FIG. 8) for Terminal A 701 via SIP and may know the presence ID corresponding to Terminal A 701. Terminal A 701 may insert corresponding service guide fragments under its presence ID (STEP 802). Alternatively, Terminal A 701 may insert service guide fragment IDs corresponding to service, content or access information that Terminal A 701 may be receiving or consuming. For example, the information that Terminal A 701 may insert under the corresponding presence ID may include content-related descriptions, service or schedule-related descriptions, access or network-related descriptions or fragments or corresponding references. The information may be inserted under the corresponding presence ID at the presence server 705. For example, the PUA 702 of Terminal A 701 may transmit the information to be inserted under the corresponding presence ID via the PNA 706 at the presence server 705 to be stored at the presence server 705 under the corresponding presence ID (STEP 803).

Alternatively or in addition to the above, Terminal B 703 may receive the service guide fragment information by another channel or backchannel.

Terminal B 703 may access the presence server 705, for example via the PNA 706 of the presence server 705, to access the information stored at the presence server 705 under the presence ID corresponding to the service guide fragments or other information of Terminal A 701 (STEP 804).

In another example, the presence information corresponding to Terminal A 701 may be changed or updated (STEP 805). If the information has been changed or updated ("YES" branch of STEP 805), the changed or updated information may be transmitted to Terminal B 703 (STEP 807). The changed or updated information corresponding to Terminal A 701 may be received via a PUA 704 of Terminal B 703. Alternatively, if there is no change in the information, then information need not be transmitted to Terminal B 703 ("NO" branch of STEP 805).

In this example, Terminal B 703 may utilize the acquired information or service guide data. For example, Terminal B 703 may set up a service or program corresponding to the service or program at Terminal A 701 based on the service guide information received. Set-up may be accomplished quickly. For example, in a DVB-H system, a service set-up time may be as long as 40 seconds or longer. By providing the presence data or service guide data to Terminal B 703 via the presence server 705, the time needed for set-up may be reduced.

Terminal B 703 may also obtain a service guide or content guide browser or access services that may be received or consumed at Terminal A 701. In addition, a user at Terminal B may purchase or subscribe to services corresponding to the presence information or service guide data corresponding to Terminal A 701.

Hence, in this example, a user at Terminal B may see what the user at Terminal A is receiving or consuming. Terminal B 703 may access the presence information of Terminal A 701 which may include service guide fragments of the service or content that Terminal A 701 is consuming. Also, the acquired information at Terminal B 703 may be used by Terminal B to instantly access the same service or program content available to Terminal A 701 which the user at Terminal A 701 may be consuming and Terminal B 703 may obtain the information without the need for performing an additional step of accessing a service guide server to retrieve the service guide information.

In accordance with at least one aspect of the invention, a presence server delivers information about one or more networks from which linked/related ESG (fragment) information can be downloaded.

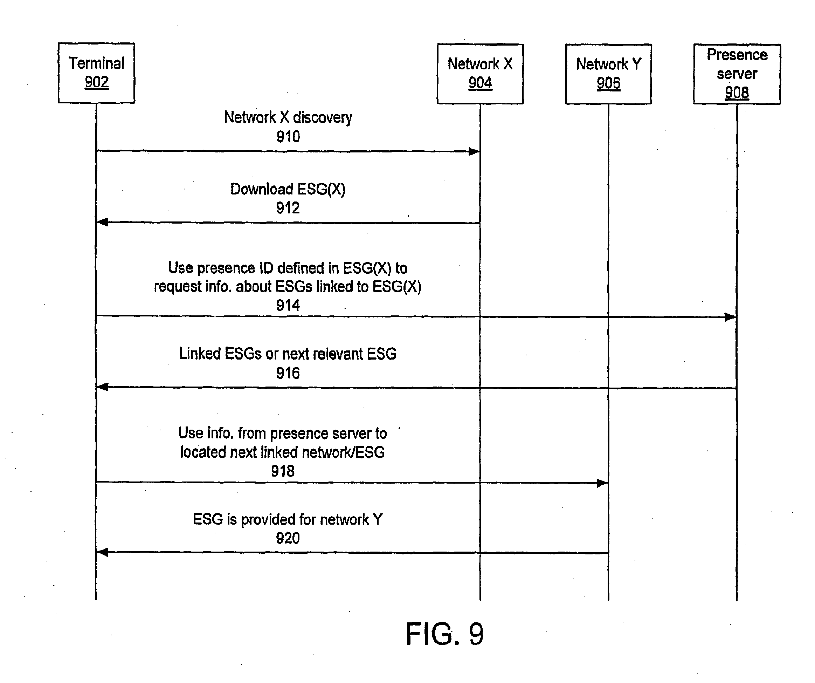

In accordance with at least one aspect of the invention, a presence server stores information about linked ESGs. Figure 9 is a flow diagram showing service discovery utilizing a presence server in accordance with at least one aspect of the invention. Terminal 902 is able to access networks X and Y, which are logically linked, (and other networks that are not shown in Figure 9). Terminal 902 initiates service discovery so that network X is discovered via a network-specific discovery mechanism, as shown at 910. An electronic service guide (ESG) for network X 904 is downloaded to the terminal 902. The terminal then uses a presence identifier (ID) defined in the ESG for network X (ESG(X)) to request, from presence server 908, information about other ESGs linked to ESG(X), as shown at 914. The presence server 908 then responds with either a list or the linked ESGs or the next relevant ESG, as shown at 916. The next relevant ESG may be determined based on the terminal's location. The terminal then uses information received from the presence server to locate a nest linked network/ESG, (e.g., network Y 906) and requests ESG information from ESG information from network Y 906, as shown at 918. Network Y provides ESG information for network Y to the terminal as shown at 920. The terminal may then use a presence identifier (ID) defined in the ESG for network X and/or network Y to request, from presence server 908, information about other ESGs linked to ESG(X) and/or ESG(Y). The presence server 908 then responds with either a list or the linked ESGs or the next relevant ESG. This process may be repeated to obtain additional ESG information from multiple networks.

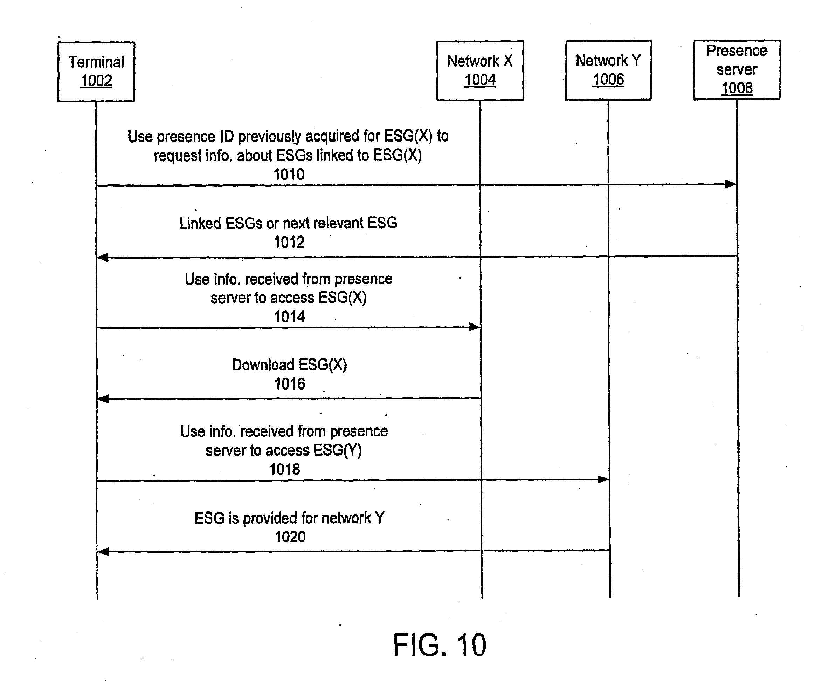

Figure 10 is a flow diagram showing service discovery with a known presence-server entry point. The presence-server entry point may be learned in accordance with the type of service discovery discussed in connection with Figure 9. Alternatively, the entry point to the presence server may be pre-provisioned. Terminal 1002 uses a presence ID that it has previously acquired for ESG(X) to request information from presence server 1008 about ESGs that are linked to ESG(X), as shown at 1010. The presence server responds with either a list of linked ESGs or the next relevant ESG, as shown at 1012. The next relevant ESG may be determined based on the terminal's location. The terminal uses information received from the presence server to access ESG(Y) from network Y 1006, as shown at 1018. Network Y provides ESG information to the terminal, via download or broadcast, as shown at 1020.

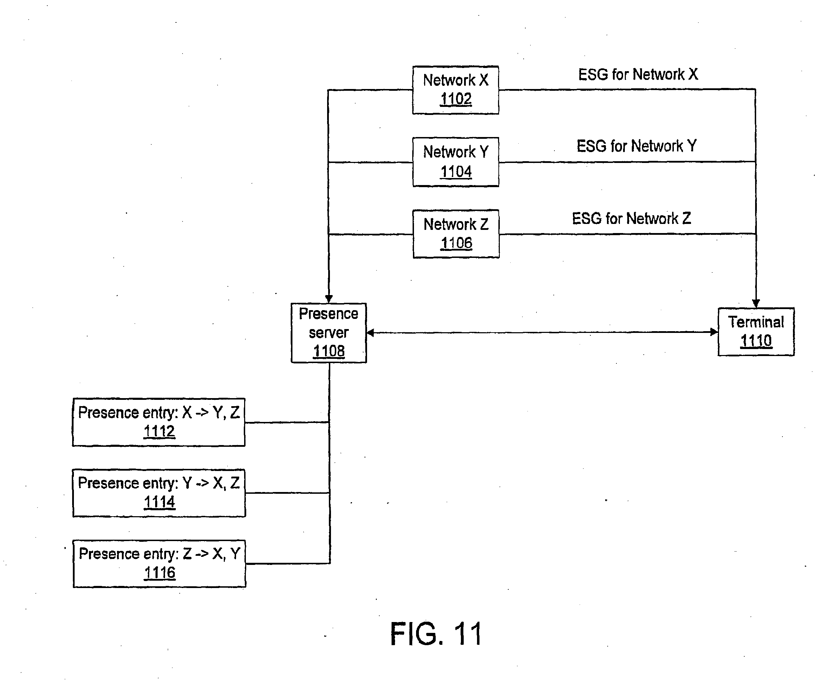

Figure 11 is a schematic diagram showing a system for performing service discovery utilizing a presence server in accordance with at least one aspect of the invention. Presence entries 1112, 1114, and 116, which are stored by the presence server 1108, link networks X 1102, Y 1104, and Z 1106. The terminal 1110 requests presence information from the presence server 1108, which provides the presence information to the terminal. And ESG information is transferred from networks X, Y, and Z to the terminal.

The embodiments herein include any feature or combination of features disclosed herein either explicitly or any generalization thereof. While the invention has been described with respect to specific examples including presently preferred modes of carrying out the invention, those skilled in the art will appreciate that there are numerous variations and permutations of the above described systems and techniques.

## Claims

1. A method comprising:
- receiving a subscription from a digital-broadcast terminal (501) to a presence service;
- receiving and storing presence information corresponding to at least one fragment of a first service guide under a presence identifier identifying the presence information at a presence server (503);
- receiving a request from the digital-broadcast terminal for information on one or more related service guides or one or more related service guide fragments that are related to the at least first service guide fragment, the request including the presence identifier at the presence server; and
- responding to the request by providing, by the presence server, to the digital-broadcast terminal a list corresponding to one or more related service guides or related service guide fragments that are related to the first service guide.

2. The method of claim 1, wherein the information corresponding to the first service guide is received from a program source.

3. The method of claim 1, wherein the information includes service guide fragment information including a link to the presence server (503).

4. The method of claim 3, wherein providing of the stored presence information corresponding to the presence identifier includes delivering service guide fragment information as a whole to the digital-broadcast terminal (501).

5. The method of claim 2, wherein the receiving of the first service guide comprises receiving a target presence identifier, the target presence identifier identifying a location in the presence server (503) to store the service guide received from the program source.

6. The method of claim 2, wherein the stored information includes service guide fragment information corresponding to the first service guide includes one or more links to the one or more linked service guides.

7. The method of claim 1, wherein the providing of the stored presence information corresponding to the presence identifier comprises transmitting information to the digital-broadcast terminal (501), the information corresponding to the one or more linked service guides.

8. The method of claim 1, further comprising:
- receiving additional information associated with the presence identifier from a second presence server (505),
wherein the providing of the stored presence information corresponding to the presence identifier comprises delivering the additional information to the digital-broadcast terminal (501).

9. The method of 8, wherein the receiving of additional information comprises uploading the additional information from the second presence server (505).

10. The method of any of the preceding claims, where the digital-broadcast terminal is a mobile terminal.

11. A computer program comprising program code that, when executed by a processor, causes the processor to perform a method according to any one of claims 1 to 10.

12. A presence server (503) comprising:
- a presence network agent (504) configured to:
- receive a subscription from a digital-broadcast terminal (501) to a presence service;
- receive and store presence information corresponding to at least one fragment of a first service guide under a presence identifier identifying the presence information;
- receive a request from the digital-broadcast for information on one or more linked service guides or one or more related service guide fragments that are related to the first service guide, the request including the presence identifier; and
- respond to the request by providing to the digital-broadcast terminal a list
corresponding to one or more related service guides or service guide fragments that are related to the first service guide.

13. The presence server (503) of claim 11, wherein the first service guide comprises an address corresponding to the presence server (503).

14. The presence server (503) of claim 11, wherein the first service guide corresponds to data received from a program source and stored at the presence server (503).

15. The presence server (503) of claim 11, wherein the presence network agent (504) comprises a presence identifier corresponding to the first service guide.

16. The presence server (503) of claim 14, wherein the presence network agent (504) is configured to further subscribe the digital-broadcast terminal (501) to a presence service in which the digital-broadcast terminal (501) is configured to receive presence information via the presence service.

17. The presence server of any of the claims 12 to 16, wherein the digital-broadcast terminal is a mobile terminal.

18. A method for use in a digital-broadcast terminal (501) comprising:
- Sending, to a presence network agent comprised by a presence server, a subscription to a presence service;
- Sending, to the presence network agent, a request for information on one or more related service guides or one or more related service guide fragments that are related to at least one first service guide fragment, the request including a presence identifier identifying the presence information corresponding to the at least one fragment of a first service guide as received and stored at the presence server; and
- Receiving, from the network presence agent, a list corresponding to one or more related service guides or related service guide fragments that are related to the service guide.

19. The method of claim 18, wherein the digital-broadcast terminal is a mobile terminal.

20. A computer program comprising program code that, when executed by a processor, causes the processor to perform a method according to claim 18 or 19.

21. A digital-broadcast terminal comprising a presence user agent arranged to:
- Send, to a presence network agent, a subscription to a presence service;
- Send, to the presence network agent, a request for information on one or more related service guides or one or more related service guide fragments that are related to at least one first service guide fragment, the request including a presence identifier identifying the presence information corresponding to the at least one fragment of a first service guide as received and stored at the presence server; and
- Receive, from the network presence agent, a list corresponding to one or more related service guides or related service guide fragments that are related to the service guide.

22. The digital-broadcast terminal according to claim 21, wherein the digital-broadcast terminal is a mobile terminal.

## Patentansprüche

1. Verfahren, enthaltend:
- Empfangen einer Subskription für einen Ausstrahlungs-Service von einem Digitalfernsehendgerät (501);
- Empfangen und Speichern von Ausstrahlungsinformationen entsprechend mindestens einem Fragment eines ersten Serviceführers unter einer Ausstrahlungskennung, die die Ausstrahlungsinformationen identifiziert, bei einem Ausstrahlungs-Server (503);
- Empfangen einer Anfrage vom Digitalfernsehendgerät nach Informationen über einen oder mehrere zugehörige Serviceführer oder ein oder mehrerer zugehörige(s) Serviceführerfragment(e), die zu dem mindestens ersten Serviceführerfragment gehören, wobei die Anfrage die Ausstrahlungskennung beinhaltet, beim Ausstrahlungs-Server; und
- Antworten auf die Anfrage, indem der Ausstrahlungs-Server beim Digitalfernsehendgerät eine Liste vorsieht, die einem oder mehreren zugehörigen Serviceführer(n) oder einem oder mehreren zugehörigen Serviceführerfragment(en), die zum ersten Serviceführer gehören, entspricht.

2. Verfahren nach Anspruch 1, wobei die Informationen, die dem ersten Serviceführer entsprechen, aus einer Programmquelle empfangen werden.

3. Verfahren nach Anspruch 1, wobei die Informationen Serviceführerfragmentinformationen beinhalten, die eine Verbindung zum Ausstrahlungs-Server (503) beinhalten.

4. Verfahren nach Anspruch 3, wobei das Vorsehen der gespeicherten Ausstrahlungsinformationen, die der Ausstrahlungskennung entsprechen, die Lieferung der vollständigen Serviceführerfragmentinformationen zum Digitalfernsehendgerät (501) beinhaltet.

5. Verfahren nach Anspruch 2, wobei das Empfangen des ersten Serviceführer das Empfangen einer Soll-Ausstrahlungskennung enthält, wobei die Soll-Ausstrahlungskennung eine Stelle im Ausstrahlungs-Server (503) zum Speichern des aus der Programmquelle empfangenen Serviceführers identifiziert.

6. Verfahren nach Anspruch 2, wobei die gespeicherten Informationen Serviceführerfragmentinformationen enthalten, die dem ersten Serviceführer entsprechen, enthaltend eine oder mehrere Verbindung(en) zu dem einen oder den mehreren verbundenen Serviceführer(n).

7. Verfahren nach Anspruch 1, wobei das Vorsehen der gespeicherten Ausstrahlungsinformationen, die der Ausstrahlungskennung entsprechen, ein Senden von Informationen zum Digitalfernsehendgerät (501) enthält, wobei die Informationen des einen oder der mehreren verbundenen Serviceführers bzw. -führern entsprechen.

8. Verfahren nach Anspruch 1, des Weiteren enthaltend:
- Empfangen zusätzlicher Informationen, die mit der Ausstrahlungskennung verknüpft sind, von einem zweiten Ausstrahlungs-Server (505);
wobei das Vorsehen der gespeicherten Ausstrahlungsinformationen, die der Ausstrahlungskennung entsprechen, eine Lieferung der zusätzlichen Informationen zum Digitalfernsehendgerät (501) enthält.

9. Verfahren nach Anspruch 8, wobei das Empfangen zusätzlicher Informationen das Hochladen der zusätzlichen Informationen aus dem zweiten Ausstrahlungs-Server (505) enthält.

10. Verfahren nach einem der vorangehenden Ansprüche, wobei das Digitalfernsehendgerät ein mobiles Endgerät ist.

11. Computerprogramm, enthaltend einen Programmcode, der bei Ausführung durch einen Prozessor den Prozessor veranlasst, ein Verfahren nach einem der Ansprüche 1 bis 10 auszuführen.

12. Ausstrahlungs-Server (503), enthaltend:
- einen Ausstrahlungsnetzwerkagenten (504), der gestaltet ist zum:
- Empfangen einer Subskription für einen Ausstrahlungs-Service von einem Digitalfernsehendgerät (501);
- Empfangen und Speichern von Ausstrahlungsinformationen entsprechend mindestens einem Fragment eines ersten Serviceführers unter einer Ausstrahlungskennung, die die Ausstrahlungsinformationen identifiziert;
- Empfangen einer Anfrage vom Digitalfernsehendgerät nach Informationen über einen oder mehrere verbundene Serviceführer oder ein oder mehrere zugehörige(s) Serviceführerfragment(e), die zum ersten Serviceführer gehören, wobei die Anfrage die Ausstrahlungskennung beinhaltet; und
- Antworten auf die Anfrage durch Vorsehen einer Liste beim Digitalfernsehendgerät, die einem oder mehreren zugehörigen Serviceführer oder einem oder mehreren Serviceführerfragment(en), die zum ersten Serviceführer gehören, entspricht.

13. Ausstrahlungs-Server (503) nach Anspruch 11, wobei der erste Serviceführer eine Adresse enthält, die dem Ausstrahlungs-Server (503) entspricht.

14. Ausstrahlungs-Server (503) nach Anspruch 11, wobei der erste Serviceführer Daten entspricht, die aus einer Programmquelle empfangen und beim Ausstrahlungs-Server (503) gespeichert werden.

15. Ausstrahlungs-Server (503) nach Anspruch 11, wobei der Ausstrahlungsnetzwerkagent (504) eine Ausstrahlungskennung enthält, die dem ersten Serviceführer entspricht.

16. Ausstrahlungs-Server (503) nach Anspruch 14, wobei der Ausstrahlungsnetzwerkagent (504) für eine weitere Subskription des Digitalfernsehendgeräts (501) für einen Ausstrahlungs-Service konfiguriert ist, bei dem das Digitalfernsehendgerät (501) zum Empfangen von Ausstrahlungsinformationen über den Ausstrahlungs-Service konfiguriert ist.

17. Ausstrahlungs-Server (503) nach einem der Ansprüche 12 bis 16, wobei das Digitalfernsehendgerät ein mobiles Endgerät ist.

18. Verfahren zur Verwendung in einem Digitalfernsehendgerät (501), enthaltend:
- Senden einer Subskription für einen Ausstrahlungs-Service zu einem Ausstrahlungsnetzwerkagenten, der in einem Ausstrahlungs-Server enthalten ist;
- Senden einer Anfrage nach Informationen über einen oder mehrere zugehörige Serviceführer oder ein oder mehrerer zugehörige(s) Serviceführerfragment(e), die zu mindestens einem ersten Serviceführerfragment gehören, zum Ausstrahlungsnetzwerkagenten, wobei die Anfrage eine Ausstrahlungskennung beinhaltet, die die Ausstrahlungsinformationen identifiziert, die dem mindestens einen Fragment eines ersten Serviceführers entsprechen, die beim Ausstrahlungs-Server empfangen und gespeichert wurde; und
- Empfangen einer Liste vom Ausstrahlungsnetzwerkagenten, die einem oder mehreren zugehörigen Serviceführer(n) oder einem oder mehreren zugehörigen Serviceführerfragment(en), die zum Serviceführer gehören, entspricht.

19. Verfahren nach Anspruch 18, wobei das Digitalfernsehendgerät ein mobiles Endgerät ist.

20. Computerprogramm, enthaltend einen Programmcode, der bei Ausführung durch einen Prozessor den Prozessor veranlasst, ein Verfahren nach Anspruch 18 oder 19 auszuführen.

21. Digitalfernsehendgerät, enthaltend einen Ausstrahlungsnutzeragenten, der ausgebildet ist zum:
- Senden einer Subskription für einen Ausstrahlungs-Service zu einem Ausstrahlungsnetzwerkagenten;
- Senden einer Anfrage nach Informationen über einen oder mehrere zugehörige Serviceführer oder ein oder mehrerer zugehörige(s) Serviceführerfragment(e), die zu mindestens einem ersten Serviceführerfragment gehören, zum Ausstrahlungsnetzwerkagenten, wobei die Anfrage eine Ausstrahlungskennung beinhaltet, die die Ausstrahlungsinformationen identifiziert, die dem mindestens einen Fragment eines ersten Serviceführers entsprechen, der beim Ausstrahlungs-Server empfangen und gespeichert wurde; und
- Empfangen einer Liste vom Ausstrahlungsnetzwerkagenten, die einem oder mehreren zugehörigen Serviceführer(n) oder einem oder mehreren zugehörigen Serviceführerfragment(en), die zum Serviceführer gehören, entspricht.

22. Digitalfernsehendgerät nach Anspruch 21, wobei das Digitalfernsehendgerät ein mobiles Endgerät ist.

## Revendications

1. Procédé comprenant :
- la réception d'un abonnement depuis un terminal de diffusion numérique (501) à un service de présence ;
- la réception et le stockage d'informations de présence correspondant à au moins un fragment d'un premier guide de service sous un identificateur de présence identifiant les informations de présence à un serveur de présence (503) ;
- la réception d'une demande par le terminal de diffusion numérique pour des informations sur un ou plusieurs guides de service apparentés ou un ou plusieurs fragments de guide de service apparentés qui se rapportent au moins à un fragment du premier guide de service, la demande comprenant l'identificateur de présence au serveur de présence ; et
- la réponse à la demande en fournissant, par le serveur de présence, au terminal de diffusion numérique d'une liste correspondant à un ou plusieurs guides de service apparentés ou fragments de guide de service apparentés qui se rapportent au premier guide de service.

2. Procédé selon la revendication 1, dans lequel les informations correspondant au premier guide de service sont reçues d'une source de programme.

3. Procédé selon la revendication 1, dans lequel les informations comprennent des informations de fragment de guide de service comprenant un lien vers le serveur de présence (503).

4. Procédé selon la revendication 3, dans lequel la fourniture d'informations de présence stockées correspondant à l'identificateur de présence comprend la remise d'informations de fragment de guide de service dans leur ensemble au terminal de diffusion numérique (501).

5. Procédé selon la revendication 2, dans lequel la réception du premier guide de service comprend la réception d'un identificateur de présence cible, l'identificateur de présence cible identifiant un emplacement dans le serveur de présence (503) pour stocker le guide de service reçu de la source de programme.

6. Procédé selon la revendication 2, dans lequel les informations stockées comprennent des informations de fragment de guide de service correspondant au premier guide de service qui comprennent un ou plusieurs liens vers le ou les guides de service liés.

7. Procédé selon la revendication 1, dans lequel la fourniture des informations de présence stockées correspondant à l'identificateur de présence comprend la transmission d'informations au terminal de diffusion numérique (501), les informations correspondantes au ou aux guide(s) de service lié(s).

8. Procédé selon la revendication 1, comprenant en outre :
- la réception d'informations supplémentaires associées à l'identificateur de présence depuis un second serveur de présence (505),
la fourniture des informations de présence stockées correspondant à l'identificateur de présence comprenant la remise des informations supplémentaires au terminal de diffusion numérique (501).

9. Procédé selon la revendication 8, dans lequel la réception d'informations supplémentaires comprend le téléchargement des informations supplémentaires depuis le second serveur de présence (505).

10. Procédé selon l'une quelconque des revendications précédentes, où le terminal de diffusion numérique est un terminal mobile.

11. Programme informatique comprenant un code de programme qui, lorsqu'il est exécuté par un processeur, fait en sorte que le processeur exécute un procédé selon l'une quelconque des revendications 1 à 10.

12. Serveur de présence (503) comprenant :
un agent réseau de présence (504) configuré pour :
- recevoir un abonnement d'un terminal de diffusion numérique (501) à un service de présence ;
- recevoir et stocker des informations de présence correspondant à au moins un fragment d'un premier guide de service sous un identificateur de présence identifiant les informations de présence ;
- recevoir une demande de la diffusion numérique pour des informations sur un ou plusieurs guides de service liés ou un ou plusieurs fragments de guide de service apparentés qui se rapportent au premier guide de service, la demande comprenant l'identificateur de présence ; et
- répondre à la demande en fournissant au terminal de diffusion numérique d'une liste correspondant à un ou plusieurs guides de service apparentés ou fragments de guide de service qui se rapportent au premier guide de service.

13. Serveur de présence (503) selon la revendication 11, dans lequel le premier guide de service comprend une adresse correspondant au serveur de présence (503).

14. Serveur de présence (503) selon la revendication 11, dans lequel le premier guide de service correspond à des données reçues d'une source de programme et stockées au serveur de présence (503).

15. Serveur de présence (503) selon la revendication 11, dans lequel l'agent réseau de présence (504) comprend un identificateur de présence correspondant au premier guide de service.

16. Serveur de présence (503) selon la revendication 14, dans lequel l'agent réseau de présence (504) est configuré pour abonner en outre le terminal de diffusion numérique (501) à un service de présence dans lequel le terminal de diffusion numérique (501) est configuré pour recevoir des informations de présence par l'intermédiaire du service de présence.

17. Serveur de présence selon l'une quelconque des revendications 12 à 16, dans lequel le terminal de diffusion numérique est un terminal mobile.

18. Procédé destiné à être utilisé dans un terminal de diffusion numérique (501) comprenant :
- l'envoi, à un agent réseau de présence compris par un serveur de présence, d'un abonnement à un service de présence ;
- l'envoi, à l'agent réseau de présence, d'une demande pour des informations sur un ou plusieurs guides de service apparentés ou un ou plusieurs fragments de guide de service apparentés qui se rapportent à au moins un fragment de premier guide de service, la demande comprenant un identificateur de présence identifiant les informations de présence correspondant à l'au moins un fragment d'un premier guide de service telles que reçues et stockées au serveur de présence, et
- la réception, de l'agent réseau de présence, d'une liste correspondant à un ou plusieurs guides de service apparentés ou fragments de guide de service apparentés qui se rapportent au guide de service.

19. Procédé selon la revendication 18, dans lequel le terminal de diffusion numérique est un terminal mobile.

20. Programme informatique comprenant un code de programme qui, lorsqu'il est exécuté par un processeur, fait en sorte que le processeur exécute un procédé selon la revendication 18 ou 19.

21. Terminal de diffusion numérique comprenant un agent utilisateur de présence disposé pour :
- envoyer, à un agent réseau de présence, un abonnement à un service de présence ;
- envoyer, à l'agent réseau de présence, une demande pour des informations sur un ou plusieurs guides de service apparentés ou un ou plusieurs fragments de guide de service apparentés qui se rapportent à au moins un fragment de premier guide de service, la demande comprenant un identificateur de présence identifiant les informations de présence correspondant à l'au moins un fragment d'un premier guide de service telles que reçues et stockées au serveur de présence, et
- recevoir, de l'agent réseau de présence, une liste correspondant à un ou plusieurs guides de service apparentés ou fragments de guide de service apparentés qui se rapportent au guide de service.

22. Terminal de diffusion numérique selon la revendication 21, où le terminal de diffusion numérique est un terminal mobile.
